Europäisches Patentamt

European Patent Office

Office européen des brevets

(11) Veröffentlichungsnummer: **0 002 307**
**B1**

(12) **EUROPÄISCHE PATENTSCHRIFT**

(45) Veröffentlichungstag der Patentschrift:
29.04.81

(21) Anmeldenummer: 78200348.7

(22) Anmeldetag: 06.12.78

(51) Int Cl.³: **G 02 F 1/09, G 02 F 1/23**

(54) Magnetooptische Lichtmodulationsanordnung.

(30) Priorität: 06.12.77 DE 2754222

(43) Veröffentlichungstag der Anmeldung:
13.06.79 Patentblatt 79/12

(45) Bekanntmachung des Hinweises auf die Patenterteilung:
29.04.81 Patentblatt 81/17

(84) Benannte Vertragsstaaten:
DE FR GB NL SE

(56) Entgegenhaltungen:
DE-A-2 355 852
DE-A-2 606 596
FR-A-2 232 770
US-A-3 141 920
US-A-3 457 414
US-A-3 971 887
RADIO FERNSEHEN ELEKTRONIK, Vol. 26, Nr. 9, Mai 1977
Berlin, DE,
»Displays mit farbigen Bubbles«, Seite 315

(73) Patentinhaber: **Philips Patentverwaltung GmbH, Steindamm 94, D-2000 Hamburg 1 (DE)**

(84) Benannte Vertragsstaaten: **DE**

(73) Patentinhaber: **N.V. Philips' Gloeilampenfabrieken, Pieter Zeemanstraat 6, NL-5621 CT Eindhoven (NL)**

(84) Benannte Vertragsstaaten **FR GB NL SE**

(72) Erfinder: **Hill, Bernhard, Dr., Paul-Sorge-Strasse 142 B, D-2000 Hamburg 61 (DE)**

(74) Vertreter: Hartmann, Heinrich et al, Philips Patentverwaltung GmbH Steindamm 94, D-2000 Hamburg 1 (DE)

## Magnetooptische Lichtmodulationsanordnung

Die Erfindung bezieht sich auf eine magnetooptische Lichtmodulationsanordnung zur räumlichen Modulation von zweifarbigem Licht, mit einer magnetooptischen Speicherschicht, z. B. aus Eisengranat, die aus durch eine zeilen- oder matrixförmige Struktur festgelegten Modulationselementen besteht, deren Magnetisierung über aufgebrachte Elektroden und Leiterbahnen durch elektronisch gesteuerte magnetische Felder und/oder thermische Energie individuell um 180° umschaltbar ist, wodurch die Modulationselemente einen von ihrem Schaltzustand abhängigen Faraday-Effekt zeigen, durch den ein zwei Polarisatoren mit dazwischen angeordneter Speicherschicht durchsetzender Lichtstrahl intensitätsmodulierbar ist.

Solche Lichtmodulationsanordnungen sind in der DE-A-26 06 596 genauer beschrieben. Bei diesen Anordnungen handelt es sich um schaltbare Dünnschichtelemente, die zeilenförmig oder matrixförmig integriert auf einem Substrat aufgebracht sind und deren Magnetisierung unabhängig voneinander durch ein thermomagnetisches Schaltverfahren über aufgedampfte Elektroden und Leiterbahnen rein elektronisch geschaltet werden kann.

In einer Polarisationsoptik kann die Magnetisierungsverteilung über den Faraday-Effekt als Hell-Dunkelverteilung sichtbar gemacht werden, so daß die Anordnung als elektronisch schaltbares Transparent zur elektrooptischen Datendarstellung benutzt werden kann. Eine einmal eingestellte Magnetisierung bleibt dabei beliebig lange gespeichert (bistabiles Schaltverhalten), sie kann aber auch beliebig oft umgeschrieben werden.

Aufgabe der vorliegenden Erfindung ist es, die magnetooptischen Komponenten durch eine geeignete Nutzung der spektralen Eigenschaften der Modulationselemente zur räumlichen Lichtmodulation von zweifarbigem Licht für eine farbige Datendarstellung zu benutzen, wobei die Farbauswahl und Farbmodulation mit jedem einzelnen Modulationselement gleichzeitig für beide Farben durchgeführt werden kann.

Gelöst wird diese Aufgabe dadurch, daß die magnetooptischen Lichtmodulationselemente zusammen mit einem dispersiven Element zur wellenlängenabhängigen Drehung der Lichtschwingungsebene zwischen den Polarisatoren angeordnet sind und die beiden Schaltzustände jedes Modulationselementes jeweils den bevorzugten Durchgang der einen oder der anderen Lichtfarbe bewirken.

Alternativ wird die Aufgabe der Erfindung auch dadurch gelöst, daß ein Substrat auf der Vorder- und der Rückseite je eine magnetooptische Speicherschicht gleicher Geometrie trägt, so daß die Schwingungsebene von jedem durch ein Modulationselement auf der Vorderseite hindurchtretenden Lichtstrahl auf der Rückseite durch ein zweites Modulationselement unabhängig von dem ersten schaltbar ist, daß die magnetooptischen Lichtmodulationselemente zusammen mit einem dispersiven Element zur wellenlängenabhängigen Drehung der Lichtschwingungsebene zwischen den Polarisatoren angeordnet sind und daß die Arbeitspunkte auf der Modulationskennlinie so angeordnet sind, daß für gleiche erste Schaltzustände beider Modulationselemente im wesentlichen nur Licht einer Farbe und für gleiche zweite Schaltzustände im wesentlichen nur Licht der zweiten Farbe hindurchgelassen wird und für entgegengesetzte Schaltzustände beider Modulationselemente beide Lichtfarben abgeschwächt durchgelassen werden oder im wesentlichen ausgeschaltet sind.

Zweckmäßig ist es, wenn jedes Modulationselement zwei Schaltzustände hat und die Arbeitspunkte in der Modulationskennlinie so gewählt sind, daß für einen Schaltzustand im wesentlichen nur eine Lichtfarbe und für den anderen Schaltzustand im wesentlichen nur die andere Lichtfarbe hindurchgelassen wird.

Der wesentliche Vorteil der Erfindung besteht darin, daß eine mehrfarbige Darstellung mit Hilfe magnetooptischer Modulationskomponenten ermöglicht wird, ohne daß die Anzahl der Modulationselemente erhöht oder die Auflösung einer darzustellenden Lichtverteilung eingeschränkt wird. Zudem sind keine Farbteilerkomponenten notwendig, um etwa einzelne Modulationselemente oder Zeilen selektiv mit Licht der darzustellenden Farbe zu beleuchten. Es werden vielmehr pauschal beide Farbanteile überlagert zugeführt.

Die Zeichnung stellt Ausführungsbeispiele dar. Es zeigen

Fig. 1a und b schematische Schnitte eines magnetooptischen Modulationselementes,

Fig. 2 eine Wirkungsgradkurve,

Fig. 3 einen schematischen Schnitt eines Ausführungsbeispiels der Erfindung,

Fig. 4 die Wirkungsgradkurve,

Fig. 5a bis d schematische Schnitte eines Doppellichtmodulationselements,

Fig. 6 die Wirkungsgradkurve dazu.

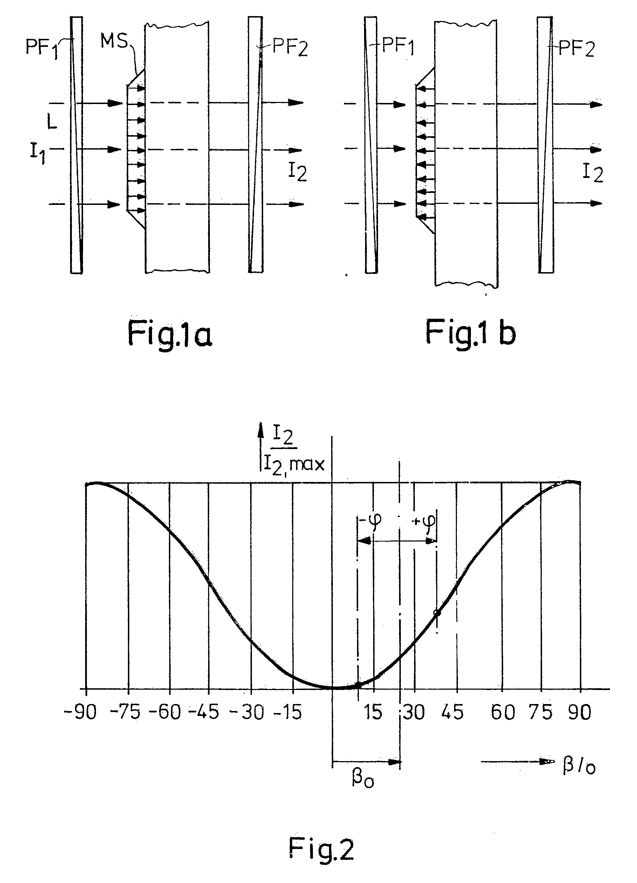

Fig. 1a und b zeigen zunächst schematische Querschnitte durch ein einzelnes magnetooptisches Modulationselement in einer Polarisationsoptik, bestehend aus zwei Polarisationsfolien $PF_1$ und $PF_2$. Das magnetooptische Modulationselement MS, das z. B. aus einer Eisengranatschicht mit spezieller Dotierung aufgebaut sein kann, besteht im wesentlichen aus einer dünnen magnetooptischen Schicht (z. B. 3 bis 8 Mikrometer dick), die einen Bereich von z. B. $10 \times 10 \ \mu m^2$ oder größer auf einem Substrat bedeckt.

Die magnetooptische Schicht ist, wie in der DE-A-26 06 596 genauer dargestellt, mit einer dünnen transparenten Elektrode bedeckt, über die zum Schalten ein Stromimpuls geführt wird. Dieser heizt für einige Mikrosekunden Dauer die magnetische Schicht auf, so daß durch einen thermomagnetischen Effekt die interne Magnetisierung der Schicht in die Richtung eines von außen angelegten Magnetfeldes ausgerichtet werden kann. Dabei sind zwei stabile Zustände der internen Magnetisierung möglich, die zu einer Ausrichtung parallel oder antiparallel zur Schichtnormalen führen. Diese Zustände bleiben beliebig lange erhalten (gespeichert), bis durch erneuten Stromstoß in einem Magnetfeld ein erneutes Umschalten durchgeführt wird.

Entsprechend der parallelen oder antiparallelen Ausrichtung der Magnetisierung wird die Schwingungsebene von hindurchtretendem polarisiertem Licht, das z. B. mit einer Polarisationsfolie $PF_1$ hergestellt wird, nach rechts- oder links in Ausbreitungsrichtung des Lichtes um einen Winkel $\pm\varphi$ gedreht. Um damit eine Lichtintensitätsmodulation zu ermöglichen, wird am Ausgang eine weitere Polarisationsfolie $PF_2$ angeordnet, deren Durchlaßrichtung einen bestimmten Winkel $\beta_0$ mit der Senkrechten zur Schwingungsebene des einfallenden Lichtes einschließt. Stellt man die Polarisationsfolie so ein, daß ihre Durchlaßrichtung senkrecht zur Schwingungsebene des aus dem Modulationselement MS austretenden Lichtes liegt, dann wird kein Licht hindurchgelassen. Für die dagegen umgeschaltete Magnetisierung kann dann Licht austreten. Stimmt die Durchlaßrichtung mit der Schwingungsebene des Lichtes überein, dann erhält man eine maximale Lichtintensität $I_{2,\,max}$ am Ausgang. Allgemein ist in Abhängigkeit des Winkels $\beta_0$ die Lichtausgangsintensität am Ausgang bezogen auf die maximale Intensität:

$$\frac{I_2}{I_{2,\,max}} = \sin^2\{\beta_0 \pm \varphi\}.$$

Diese Funktion beschreibt die Modulationskennlinie der Anordnung (Fig. 2). Als optischen Wirkungsgrad des Modulationselementes durch den Faraday-Effekt (ohne Berücksichtigung von Absorption oder Reflexion) bezeichnet man die Größe

$$\eta_{IF} = \sin^2\{|\beta_0| + |\varphi|\}.$$

Das Verhältnis von größerer zu kleinerer Intensität für einen gewählten Arbeitspunkt $\beta_0$ auf der Kennlinie nennt man Schaltkontrast C

$$C = \frac{\sin^2\{|\beta_0| + |\varphi|\}}{\sin^2\{|\beta_0| - |\varphi|\}}.$$

Durch die Wahl des Arbeitspunktes kann der Schaltkontrast theoretisch zwischen dem Wert 0 und $\infty$ eingestellt werden. In der Praxis wird er jedoch begrenzt durch zusätzlich zum Faraday-Effekt im Substrat auftretende Spannungsdoppelbrechung und durch das endliche Extinktionsverhältnis der Polarisationsfolien.

Der Faraday-Effekt eines solchen Lichtmodulationselementes ist stark wellenlängenabhängig. Beim Übergang von kurzen Lichtwellenlängen bis zu langen Lichtwellenlängen im sichtbaren Bereich treten Unterschiede bis zu 1 : 3 auf. Für einen festen eingestellten Arbeitspunkt der Polarisationsfolien ($\beta_0$) ändern sich damit auch Schaltkontrast und Wirkungsgrad wellenlängenabhängig. Ein gezieltes Einstellen dieser Werte gleichzeitig für z. B. zwei verschiedene Wellenlängen erfordert daher ein dispersives Bauelement, das die Schwingungsebene wellenlängenabhängig einzustellen gestattet.

Ein solches Bauelement kann z. B. unter Ausnutzung der Drehung der Schwingungsebene polarisierten Lichtes in bestimmten Festkörpern wie Quarz, Zinnober, usw. oder Flüssigkeiten (Rohrzucker, Natriumphosphat, usw.) realisiert werden. Auch die Faraday-Drehung in magnetisierten Materialien könnte dazu in Betracht gezogen werden.

Eine Quarzplatte in bestimmter Schnittebene wird z. B. so benutzt, daß die Schwingungsebene eines einfallenden Lichtstrahls beim Durchlaufen der Platte einer bestimmten Dicke um einen bestimmten festen Betrag gedreht wird. Für eine andere Wellenlänge erhält man eine andere Drehung. Erfindungsgemäß wird nun die Drehung für zwei verschiedene Lichtwellenlängen so eingestellt, daß für gleiche Schwingungsrichtung vor der Platte hinter der Platte ein Winkel von

$$|\beta_0(\lambda_1)| + |\beta_0(\lambda_2)|$$

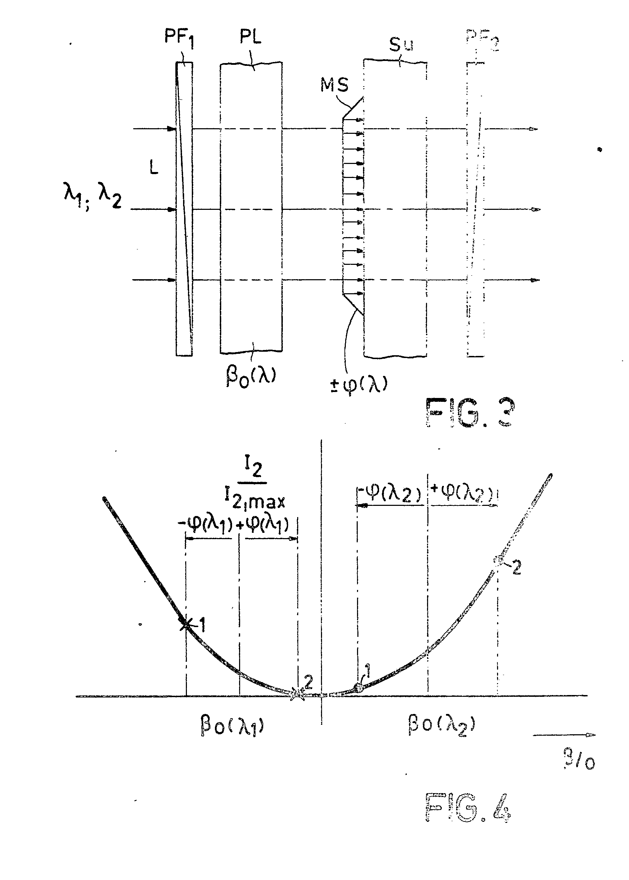

zwischen den Schwingungsebenen des Lichtes der beiden Wellenlängen auftritt. Die Platte PL wird dann zwischen die beiden Polarisationsfolien $PF_1$, $PF_2$ und die Lichtmodulationsanordnungen (MS, Su) entsprechend Fig. 3 eingebaut. Auf der Modulationskennlinie werden dann mit der Stellung der Polarisationsfolien zueinander entsprechend Fig. 4 die Arbeitspunkte $\beta_0(\lambda_1)$ und $\beta_0(\lambda_2)$ so eingestellt, daß für Licht der einen Wellenlänge für die Schaltstellung 1 des Modulationselementes MS das Licht ausgeschaltet und für Licht der anderen Wellenlänge das Licht dabei eingeschaltet ist und umgekehrt für Schaltstellung 2. Durch Schalten des Elementes erscheinen dabei abwechselnd die eine oder die andere Lichtfarbe am Ausgang.

Die Arbeitspunkte können auch so eingestellt werden, daß jede Lichtfarbe nicht ganz sondern nur mit einem bestimmten Schaltkontrast C $(\lambda)$ ausgeschaltet wird. Dann erscheinen für die beiden Schaltstellungen bestimmte Mischfarben.

Durch sehr schnelles Hin- und Herschalten ermöglicht die Erfindung auch eine zeitlich variable Mischfarbeneinstellung, wenn das Tastverhältnis für das Schalten von einer auf die andere Farbe und zurück variiert wird und so schnell geschaltet wird, daß ein Betrachter nur den integralen Mittelwert der Schaltzustände sieht. Dabei kann ein kontinuierlicher Übergang von der einen Lichtfarbe allein über alle möglichen Mischfarben bis zur anderen Lichtfarbe eingestellt werden.

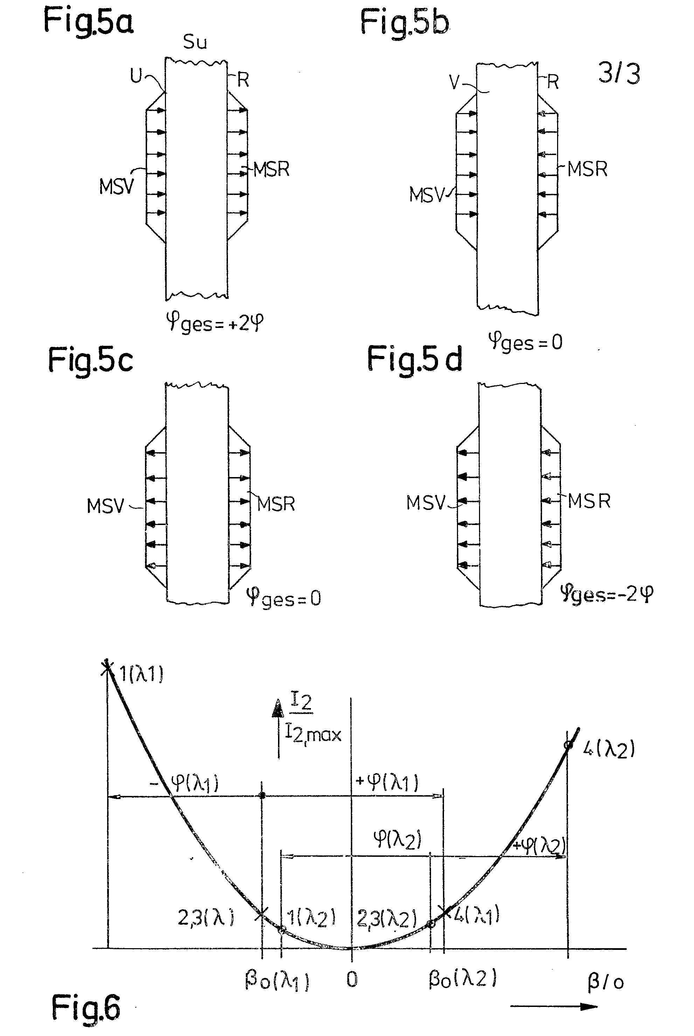

Eine andere Ausführungsform der Erfindung ermöglicht nicht nur das Hin- und Herschalten zwischen zwei Farben sondern auch das Ein- und Ausschalten beider Farben. Dabei wird auf dem Substrat Su nicht nur auf der Vorderseite, sondern auch auf der Rückseite eine zeilenförmige oder matrixartige Modulationsstruktur vorgesehen, die dieselbe Geometrie und Lage wie die Struktur auf der Vorderseite besitzt (Fig. 5a—d). Für das Beispiel von Eisengranatschichten, die epitaktisch hergestellt werden, ist dies besonders einfach möglich, da das Substrat Su durch den Tauchprozeß bei der Herstellung ohnehin auf der Vorder- und Rückseite eine Eisengranatschicht erhält. Für »normale« Anwendungen wird die Schicht auf der Rückseite entfernt.

Durch diese Struktur jeweils auf der Vorder- und Rückseite V, R von Su ergibt sich die Möglichkeit, jeden Lichtteilstrahl durch ein Modulationselement MSV, MSR mit zwei voneinander unabhängigen Parametern zu schalten. Entsprechend den einstellbaren Magnetisierungen in Fig. 5a—d erhält man aus vier möglichen Schaltstellungen bei gleicher Schichtdicke der Modulationselemente auf der Vorder- und Rückseite drei verschiedene Werte der gesamten Faraday-Drehung. Auf der Modulationskennlinie können nun die Arbeitspunkte für zwei Lichtwellenlängen entsprechend Fig. 6 so eingestellt werden, daß für jeweils zwei Schaltstellungen beide Farben im wesentlichen ausgeschaltet sind und für die Schaltstellungen 1 und 4 entweder die eine oder die andere Farbe eingeschaltet ist.

Durch andere Wahl der Arbeitspunkte können auch umschaltbar Mischfarben erzeugt werden. Durch schnelles Hin- und Herschalten zwischen verschiedenen Schaltstellungen ist bei dieser Ausführungsform für einen Beobachter oder ein integrierendes Aufnahmematerial auch die mehrfarbige Darstellung mit Helligkeitsmodulation möglich. Zweifarbige Darstellungen mit Helligkeitsvariation z. B. dadurch, daß in schneller zeitlicher Folge mit variablem Tastverhältnis einmal die eine, dann die andere ein- oder ausgeschaltet wird.

Durch Abätzen einer Schicht können auch unterschiedliche Schichtdicken auf der Vorder- und Rückseite der Modulationsstruktur hergestellt werden. Als Beispiel sei ein Fall erwähnt, bei dem die Schichtdicke auf der Vorderseite doppelt so groß ist wie auf der Rückseite. Beschreibt man die Faraday-Drehung der Vorderseite mit $\pm\varphi$, dann können für die vier möglichen Schaltstellungen die Gesamtdrehungen

$$\left( -\frac{3}{2}\,\varphi; \quad -\frac{1}{2}\,\varphi; \quad +\frac{1}{2}\,\varphi; \quad +\frac{3}{2}\,\varphi \right)$$

eingestellt werden. Bei ensprechender Anordnung auf der Modulationskennlinie können damit vier verschiedene Mischkombinationen für die Farbmodulation realisiert werden.

## Patentansprüche

1. Magnetooptische Lichtmodulationsanordnung zur räumlichen Modulation von zweifarbigem Licht, mit einer magnetooptischen Speicherschicht (MS), z. B. aus Eisengranat, die aus durch eine zeilen- oder matrixförmige Struktur festgelegten Modulationselementen besteht, deren Magnetisierung über aufgebrachte Elektroden und Leiterbahnen durch elektronisch gesteuerte magnetische Felder und/oder thermische Energie individuell um 180° umschaltbar ist, wodurch die Modulationselemente einen von ihrem Schaltzustand abhängigen Faraday-Effekt zeigen, durch den ein zwei Polarisatoren ($PF_1$, $PF_2$) mit dazwischen angeordneter Speicherschicht (MS) durchsetzender Lichtstrahl intensitätsmodulierbar ist, dadurch gekennzeichnet, daß die magnetooptischen Lichtmodulationselemente zusammen mit einem dispersiven Element (PL) zur wellenlängenabhängigen Drehung der Lichtschwingungsebene zwischen den Polarisatoren ($PF_1$, $PF_2$) angeordnet sind und die beiden Schaltzustände jedes Modulationselementes jeweils den bevorzugten Durchgang der einen oder der anderen Lichtfarbe bewirken.

2. Magnetooptische Lichtmodulationsanordnung nach Anspruch 1, dadurch gekennzeichnet, daß für die beiden Schaltzustände die Arbeitspunkte in der Modulationskennlinie so gewählt sind, daß für einen Schaltzustand im wesentlichen nur eine Lichtfarbe und für den anderen Schaltzustand im wesentlichen nur die andere Lichtfarbe hindurchgelassen wird.

3. Magnetooptische Lichtmodulationsanordnung zur räumlichen Modulation von zweifarbigem Licht, mit wenigstens einer magnetooptischen Speicherschicht, z. B. aus Eisengranat, die aus durch eine zeilen- oder matrixförmige Struktur festgelegten Modulationselementen besteht, deren Magnetisierung über aufgebrachte Elektroden und Leiterbahnen durch elektronisch gesteuerte magnetische Felder und/oder thermische Energie individuell um 180° umschaltbar ist, wodurch die Modulationselemente einen von ihrem Schaltzustand abhängigen Faraday-Effekt zeigen, durch den ein zwei Polarisatoren (PF$_1$, PF$_2$) mit dazwischen angeordneter Speicherschicht durchsetzender Lichtstrahl intensitätsmodulierbar ist, dadurch gekennzeichnet, daß ein Substrat auf der Vorder- und der Rückseite je eine magnetooptische Speicherschicht (MSV, MSR) gleicher Geometrie trägt, so daß die Schwingungsebene von jedem durch ein Modulationselement auf der Vorderseite hindurchtretenden Lichtstrahl auf der Rückseite durch ein zweites Modulationselement unabhängig von dem ersten schaltbar ist, daß die magnetooptischen Lichtmodulationselemente zusammen mit einem dispersiven Element (PL) zur wellenlängenabhängigen Drehung der Lichtschwingungsebene zwischen den Polarisatoren (PF$_1$, PF$_2$) angeordnet sind und daß die Arbeitspunkte auf der Modulationskennlinie so angeordnet sind, daß für gleiche erste Schaltzustände beider Modulationselemente im wesentlichen nur Licht einer Farbe und für gleiche zweite Schaltzustände im wesentlichen nur Licht der zweiten Farbe hindurchgelassen wird und für entgegengesetzte Schaltzustände beider Modulationselemente beide Lichtfarben abgeschwächt durchgelassen werden oder im wesentlichen ausgeschaltet sind.

4. Magnetooptische Lichtmodulationsanordnung nach Anspruch 3, dadurch gekennzeichnet, daß die Schichtdicken der magnetooptischen Schicht auf der Vorder- und Rückseite unterschiedlich dick sind, um bei entgegengesetzten Schaltzuständen Licht beider Lichtfarben abgeschwächt hindurchzulassen.

5. Magnetooptische Lichtmodulationsanordnung nach Anspruch 1 bis 4, dadurch gekennzeichnet, daß die Schaltzustände der Modulationselemente mit einstellbarem Tastverhältnis umschaltbar sind.

**Claims**

1. A magneto-optical light modulation arrangement for the spatial modulation of dichromatic light, having a magneto-optical memory layer (MS), for example of iron garnet, which consists of modulation elements arranged in a line-shaped or matrix-shaped structure, the magnetization of which can be switched individually through 180° by electronically controlled magnetic fields and/or thermal energy via electrodes and conductor paths provided for this purpose, so that the modulation elements show a Faraday effect depending on their switched condition, by which effect a light beam passing through the polarisers (PF$_1$, PF$_2$) with interposed memory layer (MS) can be intensity-modulated, characterized in that the magnetooptical light modulation elements together with a dispersive element (PL) for the wavelength-dependent rotation of the light vibration plane are arranged between the polarisers (PF$_1$, PF$_2$) and that the two switched conditions of each modulation element cause, one each, the preferred passage of one or the other light colour.

2. A magneto-optical light modulation arrangement as claimed in Claim 1, characterized in that the two switched conditions the operating points in the modulation characteristic are chosen so that substantially only one light colour is passed for one switched condition and substantially only the other light colour is passed for the other switched condition.

3. A magneto-optical light modulation arrangement for the spatial modulation of dichromatic light, having at least one magneto optical memory layer, for example of iron garnet, which consists of modulation elements arranged in a line-shaped or matrix-shaped structure, the magnetization of which can be switched individually through 180° by electronically controlled magnetic fields and/or thermal energy via electrodes and conductor paths provided for this purpose, so that the modulation elements show a Faraday effect depending on their switched condition, by which effect a light beam passing through two polarisers (PF$_1$, PF$_2$) with interposed memory layer can be intensitymodulated, characterized in that a substrate has a magnetooptical memory layer (MSV, MSR) of the same geometry on the front and in the rear side, so that the vibration plane of each light beam passing through a modulation element on the front side can be switched on the rear side by a second modulation element independently of the first, that the magneto-optical light modulation elements together with a dispersive element (PL) for the wavelength-dependent rotation of the light vibration plane are arranged between the polarisers (PF$_1$, PF$_2$), and that the operating points on the modulation characteristic are arranged so that for equal first switched conditions of the two modulation elements substantially only light of one colour is passed and for equal second switched conditions substantially only light of the second colour is passed, and that for opposite switched conditions of the two modulation elements both light colours are passed in an attenuated manner or are substantially switched off.

4. A magneto-optical light modulation arrangement as claimed in Claim 3, characterized in that the thicknesses of the magneto-optical layers on the front and rear sides are different so as to pass in an attenuated manner light of both light colours when the switched conditions are opposite.

5. A magneto-optical light modulation arrangement as claimed in Claims 1 to 4, characterized in that the switched conditions of the modulation elements can be switched with an adjustable duty cycle.

## Revendications

1. Dispositif de modulation de lumière magnétooptique servant à la modulation spatiale de lumière bicolore et muni d'une couche de mémorisation magnéto-optique (MS), par exemple en grenat de fer, qui est constituée par des éléments de modulation fixés par une structure linéaire ou matricielle d'éléments dont l'aimantation, à travers des électrodes et des pistes conductrices prévues sur ceux-ci, peut être inversée individuellement de 180° par des champs magnétiques et/ou de l'énergie thermique commandés électroniquement, de sorte que les éléments de modulation présentent un effet de Faraday dépendant de leur état de commutation, effet de Faraday qui permet de moduler l'intensité d'un rayon lumineux traversant deux polarisateurs (PF₁, PF₂) ainsi que la couche de mémorisation (MS) interposée entre ces polarisateurs, caractérisé en ce que les éléments de modulation de lumière magnéto-optique sont disposés entre les polarisateurs (PF₁, PF₂) ensemble avec un élément dispersif (PL) servant à la rotation du plan de polarisation de lumière en fonction de la longueur d'onde et que les deux états de commutation de chaque élément de modulation provoquent chaque fois la transmission préférentielle de l'une ou de l'autre couleur de lumière.

2. Dispositif de modulation de lumière magnétooptique selon la revendication 1, caractérisé en ce que pour les deux états de commutation, on a choisi les points de fonctionnement dans la caractéristique de modulation de façon que dans l'un des états de commutation, il n'y a transmission essentiellement que de l'une des couleurs de la lumière et dans l'autre état de commutation il n'y a transmission essentiellement que de l'autre couleur de lumière.

3. Dispositif de modulation de lumière magnétooptique servant à la modulation spatiale de lumière bicolore et muni d'au moins une couche de mémorisation magnéto-optique par exemple en grenat de fer, qui est constitué par des éléments de modulation fixés par une structure linéaire ou matricielle, éléments dont la magnétisation, à travers des électrodes et des pistes conductrices prévues sur ceux-ci, peut être inversé individuellement de 180° commande électroniquement par des champs magnétiques et/ou de l'énergie thermique, de sorte que les éléments de modulation présentent un effet de Faraday dépenfant de leur état de commutation, effet de Faraday qui permet de moduler l'intensité d'un rayon lumineux traversant deux polarisateurs (PF₁, PF₂) ainsi que la couche de mémorisation interposée entre ces polarisateurs, caractérisé en ce qu'un substrat porte tant sur sa face supérieure que sur sa face inférieure une couche de mémorisation magnéto-optique (MSV, MSR) de géométrie identique de sorte que le plan d'oscillation de chaque rayon lumineux traversant un élément de modulation prévu sur la face supérieure peut —etre changé sur la face inférieure par un second élément de modulation, indépendamment du premier élément, que les éléments de modulation de lumière magnéto-optique sont disposés entre les polarisateurs (PF₁, PF₂) ensemble avec un élément dispersif (PL) servant à la rotation du plan de polarisation de la lumière en fonction de la longueur d'onde, et que les points de fonctionnement sont disposés dans la caractéristique de modulation de façon que, si les premiers états de commutation des deux éléments de modulation sont égaux, il n'y a transmission essentiellement que de l'une couleur de lumière et, si les seconds états de commutation sont égaux, il n'y a transmission essentiellement que de l'autre couleur de lumière et, si les états de commutation des deux éléments de modulation sont opposés, il y a transmission affaiblie de l'une et de l'autre couleur de lumière ou suppression des deux couleurs de lumière.

4. Dispositif de modulation de lumière magnétooptique selon la revendication 3, caractérisé en ce que les couches magnéto-optiques prévues sur la face supérieure et la face inférieure sont d'épaisseur différente, de façon que si les états de commutation sont opposés, il y a transmission affaiblie des deux couleurs de lumière.

5. Dispositif de modulation de lumière magnétooptique selon l'une quelconque des revendications 1 à 4, caractérisé en ce que les états de commutation des éléments de modulation peuvent être changés à un taux d'impulsions réglable.

6

Fig.1a          Fig.1 b

Fig.2

FIG. 3

FIG. 4

# Fig.5a

Su

U · R

MSV · MSR

$\varphi_{ges}=+2\varphi$

# Fig.5b

V · R

3/3

MSV · MSR

$\varphi_{ges}=0$

# Fig.5c

MSV · MSR

$\varphi_{ges}=0$

# Fig.5d

MSV · MSR

$\varphi_{ges}=-2\varphi$

$1(\lambda_1)$

$\dfrac{I_2}{I_{2,max}}$

$-\varphi(\lambda_1)$ · $+\varphi(\lambda_1)$

$4(\lambda_2)$

$\varphi(\lambda_2)$ · $+\varphi(\lambda_2)$

$2,3(\lambda)$ · $1(\lambda_2)$ · $2,3(\lambda_2)$ · $4(\lambda_1)$

$\beta_0(\lambda_1)$ · 0 · $\beta_0(\lambda_2)$ · $\beta/o$

# Fig.6

11